# EUROPEAN PATENT APPLICATION

(11) **EP 4 852 582 A1**
(43) Date of publication of application: **09.12.2026**
(21) Application number: 24922375.1
(22) Date of filing: 30.01.2024
(51) Int. Cl.: H04W 72/23, H04W 4/70, H04W 52/02, H04W 72/1268, H04W 72/21

(54) **DEVICE AND COMMUNICATION METHOD**

(71) Applicant: NTT DOCOMO, INC., Tokyo 100-6150 (JP)
(72) Inventor: OKANO, Mayuko, Tokyo 100-6150 (JP); YOSHIOKA, Shohei, Tokyo 100-6150 (JP); KUMAGAI, Shinya, Tokyo 100-6150 (JP); NAGATA, Satoshi, Tokyo 100-6150 (JP); SUN, Weiqi, Beijing 100190 (CN); WANG, Jing, Beijing 100190 (CN); YOU, Luhua, Beijing 100190 (CN); CHEN, Lan, Beijing 100190 (CN)
(74) Representative: Hoffmann Eitle
(86) International application number: PCT/JP2024/002863
(87) International publication number: WO 2025/163742

(57) **Abstract**

A device having a lower complexity than a narrow band-Internet of Things (NB-IoT) device includes: a control unit for waking up the device on the basis of wireless power from a network; a reception unit for receiving information from the network after the device wakes up; and a transmission unit for transmitting a signal to the network on the basis of the information.

## Description

### Technical Field

The present disclosure relates to a device and a communication method.

### Background Art

In New Radio (NR) (also referred to as "5G") that is a successor system of Long Term Evolution (LTE), a technology that satisfies a large-capacity system, a high data transmission speed, low latency, simultaneous connection of a large number of terminals, low cost, low power consumption, and the like as a requirement condition has been discussed (e.g., Non-Patent Literature (hereinafter, referred to as "NPL") 1).

Further, in Release 18 of 3GPP (registered trademark), Ambient Internet of Things (A-IoT) has been studied (e.g., NPL 2). In A-IoT, the target is a device having an extremely simple configuration for a low-end IoT application that operates with extremely low power consumption.

### Citation List

### Non-Patent Literature

NPL 1
   3GPP TS 38.300 V17.3.0 (2022-12)
NPL 2
   "Revised SID on Ambient IoT", RP-232404, 3GPP TSG RAN Meeting #101, September 2023
NPL 3
   3GPP TR 38.848 V1.0.0 (2023-09)
NPL 4
   3GPP TS 36.211 V16.7.0 (2021-09)
NPL 5
   "New SID: Study on solutions for Ambient IoT (Internet of Things) in NR", RP-234058, 3GPP TSG RAN Meeting #102, December 2023

### Summary of Invention

However, in the ambient IoT, an operation related to transmission of a signal has not been sufficiently studied, and further study is required.

An aspect of the present disclosure is to provide a device and a communication method each capable of appropriately transmitting a signal.

### Solution to Problem

A device according to an aspect of the present disclosure is a device having a lower complexity than a narrow band-internet of things (NB-IoT) device, and the device includes: a control section that wakes up the device based on radio power from a network; a reception section that receives information from the network after the device is woken up; and a transmission section that transmits a signal to the network based on the information.

### Brief Description of Drawings

[FIG. 1] FIG. 1 is a diagram illustrating a configuration example of a radio communication system according to an embodiment.
[FIG. 2] FIG. 2 is a diagram for describing Topology 1.
[FIG. 3] FIG. 3 is a diagram for describing Topology 2.
[FIG. 4] FIG. 4 is a diagram for describing Topology 3 with downlink (DL) assistance.
[FIG. 5] FIG. 5 is a diagram for describing Topology 3 with uplink (UL) assistance.
[FIG. 6] FIG. 6 is a diagram for describing Topology 4.
[FIG. 7] FIG. 7 is a diagram for describing backscattering transmission.
[FIG. 8] FIG. 8 is a diagram illustrating a communication flow of DT in Topology 1.
[FIG. 9] FIG. 9 is a diagram illustrating a communication flow of DO-DTT in Topology 1.
[FIG. 10] FIG. 10 is a diagram illustrating a communication flow of DT in Topology 2.
[FIG. 11] FIG. 11 is a diagram illustrating a communication flow of DO-DTT in Topology 2.
[FIG. 12] FIG. 12 is a diagram for describing Proposal 1.
[FIG. 13A] FIG. 13A is a diagram illustrating PIE.
[FIG. 13B] FIG. 13B is another diagram illustrating PIE.
[FIG. 14A] FIG. 14A is a diagram illustrating data 0 of FM0.
[FIG. 14B] FIG. 14B is another diagram illustrating data 0 of FM0.
[FIG. 15A] FIG. 15A is a diagram illustrating data 1 of FM0.
[FIG. 15B] FIG. 15B is another diagram illustrating data 1 of FM0.
[FIG. 16A] FIG. 16A is a diagram illustrating data 0 of mirror encoding.
[FIG. 16B] FIG. 16B is another diagram illustrating data 0 of mirror encoding.
[FIG. 17] FIG. 17 is a diagram illustrating data 1 of mirror encoding.
[FIG. 18A] FIG. 18A is a diagram illustrating Manchester coding.
[FIG. 18B] FIG. 18B is another diagram illustrating Manchester coding.
[FIG. 19] FIG. 19 is a diagram illustrating Proposal 2: Option 1.
[FIG. 20] FIG. 20 is a diagram illustrating Proposal 2: Option 2.
[FIG. 21] FIG. 21 is a block diagram illustrating an example of a configuration of a base station according to the embodiment.
[FIG. 22] FIG. 22 is a block diagram illustrating an example of a configuration of a device according to the embodiment.
[FIG. 23] FIG. 23 is a diagram illustrating an example of a hardware configuration of the base station and the device according to the embodiment.
[FIG. 24] FIG. 24 is a diagram illustrating a configuration example of a vehicle.

### Description of Embodiments

Hereinafter, an embodiment according to an aspect of the present disclosure will be described in detail with reference to the accompanying drawings. Note that the embodiment to be described below is merely an example, and an embodiment to which the present disclosure is applied is not limited to the embodiment below.

Existing techniques are used as appropriate for operations of a radio communication system in an embodiment of the present disclosure. Note that the existing techniques include, for example, existing LTE, but are not limited to existing LTE. Further, the term "LTE" used in this specification has a broad meaning including LTE-Advanced and a system after LTE-Advanced (e.g., NR), unless otherwise specified.

Terms used in existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH), are used in an embodiment of the present disclosure described below. This is for the sake of convenience in description, and the same signals, functions, and the like may be called by other names. Further, the above terms in NR correspond to NR-SS, NR-PSS, NR-SSS, NR-PBCH, NR-PRACH, and the like. Note that, even though the signal is used in NR, it is not necessarily explicitly referred to as "NR-".

Further, in the embodiment of the present disclosure, a duplex system may be a Time Division Duplex (TDD) system, a Frequency Division Duplex (FDD) system, or another system (e.g., Flexible Duplex or the like).

Furthermore, in an embodiment of the present disclosure, the term "configured" with respect to a radio parameter or the like may refer to a predetermined value being pre-configured, or it may refer to a radio parameter indicated from a base station or a terminal including a device being configured.

### <System Configuration>

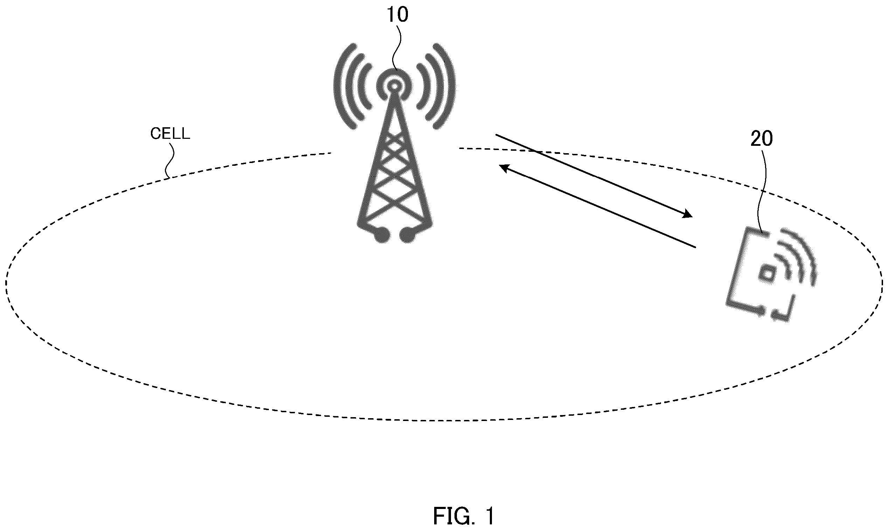

FIG. 1 is a diagram illustrating a configuration example of a radio communication system according to an embodiment. As illustrated in FIG. 1, the radio communication system includes base station 10 and device 20. Although FIG. 1 illustrates one base station 10 and one device 20, this is an example, and there may be a plurality of each. Device 20 may be an Ambient-IoT device.

Base station 10 is a communication apparatus that provides one or more cells and performs radio communication with device 20. Physical resources of the radio signal are defined in a time domain and a frequency domain. The time domain may be defined by the number of orthogonal frequency division multiplexing (OFDM) symbols. The frequency domain may be defined by the number of subcarriers or the number of resource blocks.

Base station 10 transmits a synchronization signal and system information to device 20. Base station 10 transmits a control signal and data to device 20 in downlink (DL). Base station 10 receives a control signal and data from device 20 in uplink (UL).

As will be described later, the radio communication system may include an intermediate node and/or an assisting node (see <Device Type and Topology> below). Hereinafter, "and/or" may be simply described as "/".

### <Ambient IoT>

In Rel-18 (Release-18), a study on Ambient-IoT (hereinafter, may be referred to as "A-IoT") that is even lower end than existing narrow band IoT (NB-IoT) (e.g., see section 10 of NPL 4) has been approved (e.g., see NPL 2). In A-IoT, an ultra-low power consumption and ultra-low complexity device is a target.

In A-IoT, for example, the following introduction scenarios and characteristics may be studied for related use cases.
- Indoor or outdoor environment
- Base station type, for example, macro/micro/pico cell-based deployment
- Topology related to connectivity, for example, which node among a base station, a terminal (UE), a relay, a repeater, and the like communicates with the A-IoT device
- Whether a duplex system is TDD or FDD, and whether a frequency band is a licensed band or an unlicensed band
- Coexistence with UE and network equipment in frequency band for the existing 3GPP technology
- Assumption of traffic of outgoing call from device and incoming call to device

For example, the following RAN design targets can be established based on the above-described introduction scenarios and characteristics.
- Power consumption
- Complexity
- Coverage
- Data rate
- Positioning accuracy

Based on the introduction scenarios suitable for the related use case, the feasibility of satisfying the design target is compared and evaluated, and a function to be supported is specified.

### <Device Type and Topology>

Based on the results of the study item, TR 38.848 (NPL 3) has been approved. In TR 38.848, A-IoT devices of the following categories are studied.

Device A: Device A has no power storage (energy storage) and no function of independent signal generation and signal amplification. Device A performs backscattering transmission.

Device B: Device B has power storage and has no function of independent signal generation. Device B performs backscattering transmission. Device B amplifies a reflected signal by using stored power.

Device C: Device C has power storage and has a function of independent signal generation. That is, device C has an active RF component for transmission.

It is assumed that the complexity of device A is about radio frequency identification (RFID).

In TR 38.848, Topologies 1 to 4 below are defined in an A-IoT network.

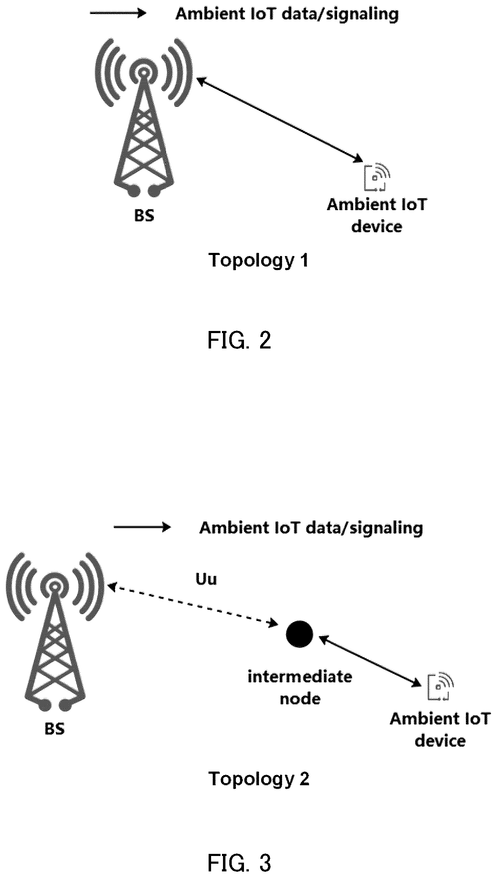

FIG. 2 is a diagram illustrating Topology 1. As illustrated in FIG. 2, Topology 1 is a configuration in which a base station (BS) and an A-IoT device communicate with each other. The A-IoT device directly executes bidirectional communication with the base station.

FIG. 3 is a diagram illustrating Topology 2. As illustrated in FIG. 3, Topology 2 is a configuration in which the base station and the A-IoT device communicate with each other via an intermediate node. The A-IoT device executes bidirectional communication with an intermediate node disposed between the base station and the A-IoT device. The intermediate node may be, for example, a relay, an integrated access and backhaul (IAB) node, UE, a repeater, or the like.

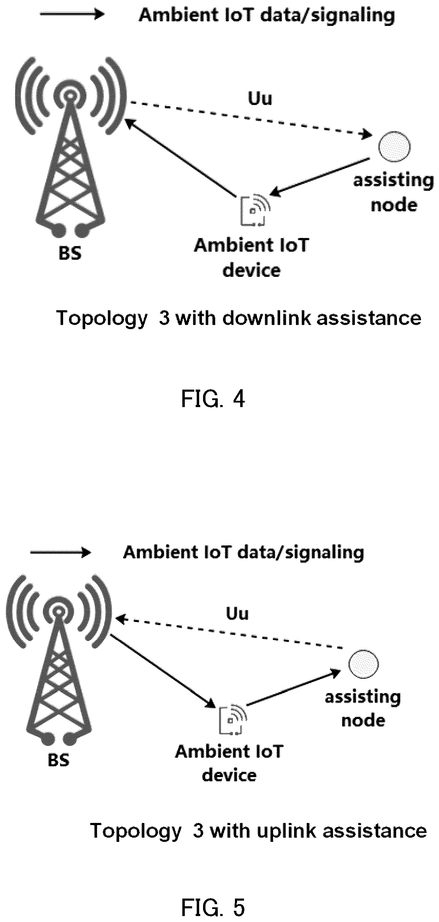

FIG. 4 is a diagram illustrating Topology 3 with DL assistance. As illustrated in FIG. 4, Topology 3 is a configuration including communication between the base station and an assisting node, communication between the assisting node and the A-IoT device, and communication between the A-IoT device and the base station.

The assisting node assists in DL communication. For example, as illustrated in FIG. 4, the assisting node receives a DL signal from the base station and transmits the DL signal to the A-IoT device. As for the UL signal, the A-IoT device directly transmits it to the base station.

FIG. 5 is a diagram illustrating Topology 3 with UL assistance. As illustrated in FIG. 5, Topology 3 is a configuration including communication between the base station and the assisting node, communication between the assisting node and the A-IoT device, and communication between the A-IoT device and the base station.

The assisting node assists in UL communication. For example, as illustrated in FIG. 5, the assisting node receives the UL signal from the A-IoT device and transmits the UL signal to the base station. As for the DL signal, the A-IoT device directly receives it from the base station.

The assisting node illustrated in FIGS. 4 and 5 may transmit a carrier wave for causing the A-IoT device to generate backscattering. The assisting node may be, for example, a relay, an IAB node, UE, a repeater, or the like.

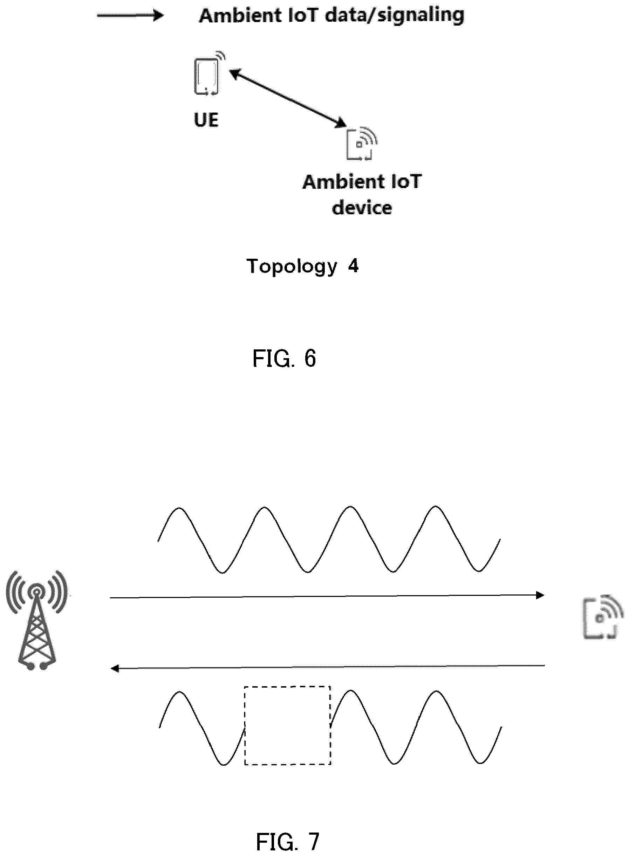

FIG. 6 is a diagram illustrating Topology 4. Topology 4 is a configuration in which UE and the A-IoT device communicate with each other. The A-IoT device executes bidirectional communication with the UE. Topology 4 can also be regarded as sidelink (SL) communication.

In Topologies 1 to 4 described above, a carrier wave may be provided to the A-IoT device from another node inside or outside the topology (see section 4.2.1 of NPL 3).

### <Backscattering Transmission>

The base station, the intermediate node, the assisting node, and another node transmit the RF signal to the A-IoT device. The A-IoT device is activated and obtains power from an RF operating field from the base station, the intermediate node, the assisting node, and another node via inductive coupling.

The A-IoT device modulates, in a backscattering manner, the RF signal received from the base station, the intermediate node, the assisting node, and another node, by switching a reflection coefficient of an antenna of its own device, and transmits information to the base station, the intermediate node, the assisting node, and another node.

FIG. 7 is a diagram illustrating backscattering transmission. FIG. 7 illustrates an example in which the A-IoT device performs On-Off keying to transmit information. A region surrounded by a broken line illustrated in FIG. 7 indicates an OFF interval and may correspond to "0" of the information (bit). A signal of a sine wave may correspond to "1" of the information.

Hereinafter, the network may include a base station, an assisting node, an intermediate node, and a terminal (UE of Topology 4). Hereinafter, the base station, the assisting node, the intermediate node, the relay, and the terminal may be referred to as a network node. The ambient IoT may be referred to as A-IoT. The A-IoT device may be referred to as an A-IoT UE.

### <Rel-19 Study Item Description (SID)>

In the SID of Rel-19, a solution that is necessary and feasible for A-IoT has been studied (section 4.1 of NPL 5). The studied solution includes, for example, determinations of which functions, procedures, and the like are necessary and which functions, procedures, and the like are not necessary.

In addition, several items are discussed under the leadership of RAN 1 for DL and UL of A-IoT. One of the items to be discussed is the scheduling and timing relationship for DL and UL in A-IoT. In the discussion of scheduling and timing relationship, the following 1. Traffic Flow, 2. Device Assumption, and 3. Topology can be studied.

### 1. Traffic Flow

The following DT and DO-DTT are studied as traffic flows of A-IoT.

### - Device Terminated (DT)

As traffic, there is transmission (DL) to the A-IoT UE, and there is no transmission (UL) from the A-IoT UE. In other words, there is information to be transmitted to the A-IoT UE, and there is no information to be transmitted from the A-IoT UE. DT corresponds to, for example, a command type in which an instruction such as an order or a command to the A-IoT UE is present.

### - Device Originated-Device Terminated Triggered (DO-DTT)

As traffic, there is a trigger from a network (NW), and there is transmission (UL) from the A-IoT UE. In other words, as traffic, there is information to be transmitted from the A-IoT UE. DO-DTT corresponds to, for example, a sensor information report type in which the A-IoT UE transmits the sensor information collected.

In the present disclosure, the transmission of information corresponds to the transmission of a signal including information or the transmission of a signal. In addition, in the present disclosure, the transmission to a certain device X corresponds to the transmission of a signal (or information) to device X. In addition, the transmission from a certain device X and the transmission of a certain device X correspond to the transmission of a signal (or information) by device X. In addition, the reception from a certain device X corresponds to the reception of a signal (or information) transmitted by device X. In addition, the reception of a certain device X corresponds to the reception of a signal (or information) by device X.

### 2. Device Assumption

In the A-IoT UE, the following transmission (TX) and frequency range (FR) 1-FDD are assumed.

### - TX

TX is UL transmission of backscattering without an amplifier (amplification) or a general UL transmission with an amplifier. Alternatively, UL transmission of backscattering with an amplifier may be executed.

### - FR1-FDD

FR1-FDD is applied to the A-IoT UE. That is, the A-IoT UE can switch the carrier frequency between the DL carrier and the UL carrier. Note that the present disclosure is not limited to FR1-FDD, and may be applied to TDD or may be applied to FR2 or FR3.

Note that the frequency band of each FR is, for example, as follows.
- FR1: 410 MHz to 7.125 GHz
- FR2: 24.25 GHz to 52.6 GHz
- FR3: 7.125 GHz to 24.25 GHz

In FR1, a sub-carrier spacing (SCS) of 15 kHz, 30 kHz, or 60 kHz is used, and a bandwidth (BW) of 5 to 100 MHz may be used. FR2 has a higher frequency than FR1, and uses an SCS of 60 kHz or 120 kHz (240 kHz may be included), and may use a bandwidth (BW) of 50 to 400 MHz.

### 3. Topology

Among the topologies illustrated in FIGS. 2 to 6, Topology 1 and Topology 2 are focused on.

In Topology 1, UL and/or DL communication is performed between the base station and the A-IoT UE without passing through an intermediate node. Note that the base station in the case of Topology 1 may support a microcell.

In Topology 2, communication is performed between the base station and the A-IoT UE via an intermediate node. The A-IoT UE performs bidirectional communication with the intermediate node disposed between the base station and the A-IoT UE. Note that the base station in the case of Topology 2 may support a macrocell. Further, the case of Topology 2 may be applied to an indoor case. Hereinafter, the intermediate node may be referred to as intermediate UE (int. UE).

### <Communication Flow>

The signal design for the A-IoT UE may be designed to be common between Topology 1 and Topology 2. Since the signal design for the A-IoT UE is common, the communication flows of DT and DO-DTT in Topology 1 and Topology 2 can be studied. The following four communication flows may be assumed as the communication flows of DT and DO-DTT in Topology 1 and Topology 2.

Note that, as described in the following four communication flows 1. to 4., the A-IoT UE is woken up in step 1 and receives information in step 2. The information received by the A-IoT UE may be read as a signal.

Further, as described in the following communication flows 2. and 4., the A-IoT UE transmits a signal in step 3. The signal transmitted by the A-IoT UE may be read as information.

### 1. Communication Flow of DT in Topology 1

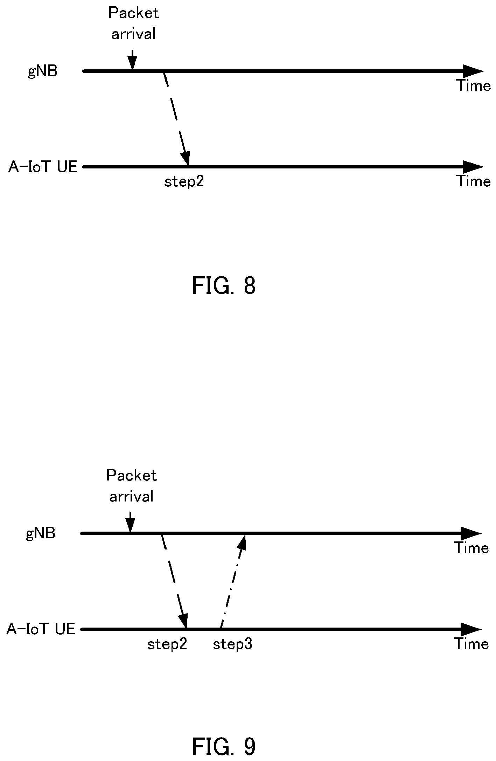

FIG. 8 is a diagram illustrating a communication flow of DT in Topology 1. FIG. 8 illustrates a flow of signals between the base station and the A-IoT UE. Note that, since the communication flow illustrated in FIG. 8 is a communication flow of DT, there is information transmission from the base station to the A-IoT UE, but there is no information transmission from the A-IoT UE to the base station.

In the communication flow of DT in Topology 1, the following two steps are assumed.
- Step 1: The A-IoT UE is woken up by a signal such as a carrier waveform transmitted from the base station (step 1 is not illustrated).
- Step 2: The A-IoT UE receives information from the base station.

Note that step 1 is started, for example, in a case where a packet is generated in an application layer of the base station (corresponding to "Packet arrival" indicated in FIG. 8) (the same applies to step 1 described with reference to FIGS. 9, 10, and 11).

The A-IoT UE may be woken up by a signal (for example, a radio frequency (RF) signal) transmitted from a source other than the base station. Here, the signal transmitted from a source other than the base station may correspond to an energy source that supplies energy to the A-IoT UE. The carrier waveform may be replaced with a carrier wave.

### 2. Communication Flow of DO-DTT in Topology 1

FIG. 9 is a diagram illustrating a communication flow of DO-DTT in Topology 1. FIG. 9 illustrates a flow of signals between the base station and the A-IoT UE. Note that, since the communication flow illustrated in FIG. 9 is a communication flow of DO-DTT, there are information transmission from the base station to the A-IoT UE and information transmission from the A-IoT UE to the base station.

In the communication flow of DO-DTT in Topology 1, the following three steps are assumed.
- Step 1: The A-IoT UE is woken up by a signal such as a carrier waveform transmitted from the base station (step 1 is not illustrated).
- Step 2: The A-IoT UE receives information from the base station.
- Step 3: The A-IoT UE transmits a signal to the base station.

### 3. Communication Flow of DT in Topology 2

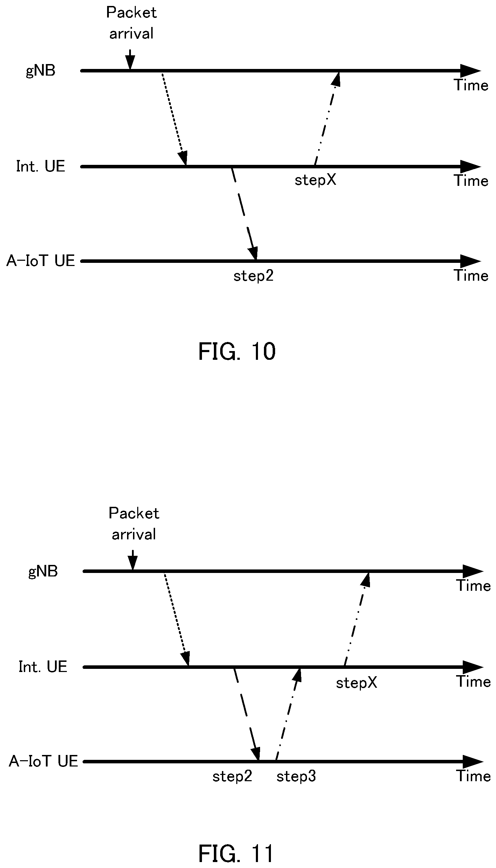

FIG. 10 is a diagram illustrating a communication flow of DT in Topology 2. FIG. 10 illustrates a flow of signals between the base station, the int. UE, and the A-IoT UE. Note that, since the communication flow illustrated in FIG. 10 is a communication flow of DT, there is information transmission to the A-IoT UE, but there is no information transmission from the A-IoT UE.

In the communication flow of DT in Topology 2, the following four steps are assumed.
- Step 0: The int. UE receives a trigger for transmitting a signal such as a carrier waveform to the A-IoT UE from the base station, and transmits the signal to the A-IoT UE based on the trigger (step 0 is not illustrated).
- Step 1: The A-IoT UE is woken up by the signal such as a carrier waveform transmitted from the int. UE (step 1 is not illustrated).
- Step 2: The A-IoT UE receives information from the base station via the int. UE.
- Step X: The int. UE transmits a signal to the base station.

### 4. Communication Flow of DO-DTT in Topology 2

FIG. 11 is a diagram illustrating a communication flow of DO-DTT in Topology 2. FIG. 11 illustrates a flow of signals between the base station, the int. UE, and the A-IoT UE. Note that, since the communication flow illustrated in FIG. 11 is a communication flow of DO-DTT, there are information transmission to the A-IoT UE and information transmission from the A-IoT UE.

In the communication flow of DO-DTT in Topology 2, the following five steps of communication flow are assumed.
- Step 0: The int. UE receives a trigger for transmitting a signal such as a carrier waveform to the A-IoT UE from the base station, and transmits the signal to the A-IoT UE based on the trigger (step 0 is not illustrated).
- Step 1: The A-IoT UE is woken up by a signal such as a carrier waveform transmitted from the int. UE (step 1 is not illustrated).
- Step 2: The A-IoT UE receives information from the base station via the int. UE.
- Step 3: The A-IoT UE transmits a signal to the int. UE.
- Step X: The int. UE transmits the signal to the base station.

### <Analysis>

### - Analysis 1

As described in <Communication Flow> above, it is assumed that the A-IoT UE is woken up in step 1 and receives information in step 2 in the four communication flows (the communication flow of DT in Topology 1, the communication flow of DO-DTT in Topology 1, the communication flow of DT in Topology 2, and the communication flow of DO-DTT in Topology 2).

However, there is a possibility that the A-IoT UE cannot appropriately receive the information in step 2.

For example, in a case where the A-IoT UE cannot recognize a format in which the information to be received by the A-IoT UE is transmitted, such as a resource and a modulation scheme, there is a possibility that the A-IoT UE cannot appropriately receive the information.

Therefore, in Proposal 1, the present disclosure provides a technology for the A-IoT UE to appropriately receive the information.

### - Analysis 2

As described in <Communication Flow> above, it is assumed that the A-IoT UE is woken up in step 1, receives information in step 2, and transmits a signal (information) in step 3 in the two communication flows (the communication flow of DO-DTT in Topology 1 and the communication flow of DO-DTT in Topology 2).

However, in a case where the A-IoT UE does not transmit an appropriate signal in step 3, there is a possibility that a network such as the base station/int. UE cannot appropriately receive the signal of the A-IoT UE.

For example, in a case where the A-IoT UE does not transmit a signal in a format such as an appropriate resource and an appropriate modulation scheme, there is a possibility that the network such as the base station/int. UE cannot appropriately receive the signal.

Therefore, in Proposal 2, the present disclosure provides a technology for the A-IoT UE to transmit an appropriate signal.

### - Analysis 3

As described in <Communication Flow> above, the presence or absence of the transmission flow (step 3) of the A-IoT UE is determined depending on whether the communication flow is DT or DO-DTT.

However, in <Communication Flow> above, it is not defined how the presence or absence of the transmission flow of the A-IoT UE is recognized, and there is a possibility that the A-IoT UE cannot appropriately determine the presence or absence of transmission of a signal.

For example, the A-IoT UE may complete the operation with the information reception operation (communication flow of DT) even though the communication flow of DO-DTT is used. For example, the A-IoT UE may execute the signal transmission operation (communication flow of DO-DTT) even though the communication flow of DT is used.

Therefore, in Proposal 3, the present disclosure provides a technology for the A-IoT UE to appropriately determine whether to transmit a signal.

### - Analysis 4

As described in <Communication Flow> above, it is assumed that the A-IoT UE is woken up in step 1 and receives information in step 2 in the four communication flows.

However, there is no definition for the size of the information received by the A-IoT UE in step 2, and there is a possibility that the A-IoT UE cannot appropriately execute the information reception operation.

For example, the A-IoT UE may complete the information reception operation even though the reception of the information is not completed. In addition, the A-IoT UE may continue the information reception operation even though the necessary information is received.

Therefore, in Proposal 4, the present disclosure provides a technology for the A-IoT UE to execute an appropriate information reception operation.

### - Analysis 5

As described in <Communication Flow> above, it is assumed that the A-IoT UE is woken up in step 1, receives information in step 2, and transmits a signal in step 3 in the two communication flows.

However, there is no definition for the size of the information transmitted by the A-IoT UE in step 3, and there is a possibility that the A-IoT UE cannot appropriately execute the information transmission operation.

For example, the A-IoT UE may complete the information transmission operation even though the transmission of the information is not completed. In addition, the A-IoT UE may continue the operation of the information even though the necessary information is transmitted.

Therefore, in Proposal 5, the present disclosure provides a technology for the A-IoT UE to execute an appropriate information transmission operation.

### <Proposal 1>

In Proposal 1, a technology for the A-IoT UE to appropriately receive information from a network such as a BS/int. UE is proposed. In Proposal 1, a step of receiving the information by the A-IoT UE is divided into two steps.

For example, step 2 in the four communication flows (the communication flow of DT in Topology 1, the communication flow of DO-DTT in Topology 1, the communication flow of DT in Topology 2, and the communication flow of DO-DTT in Topology 2) described in <Communication Flow> above is divided into two sub-steps. Specifically, step 2 is divided into the following step 2A and step 2B.
- Step 2A: The A-IoT UE receives information A such as control information from a network such as a BS/int. UE.
- Step 2B: The A-IoT UE receives information B such as data information from the network such as a BS/int. UE.

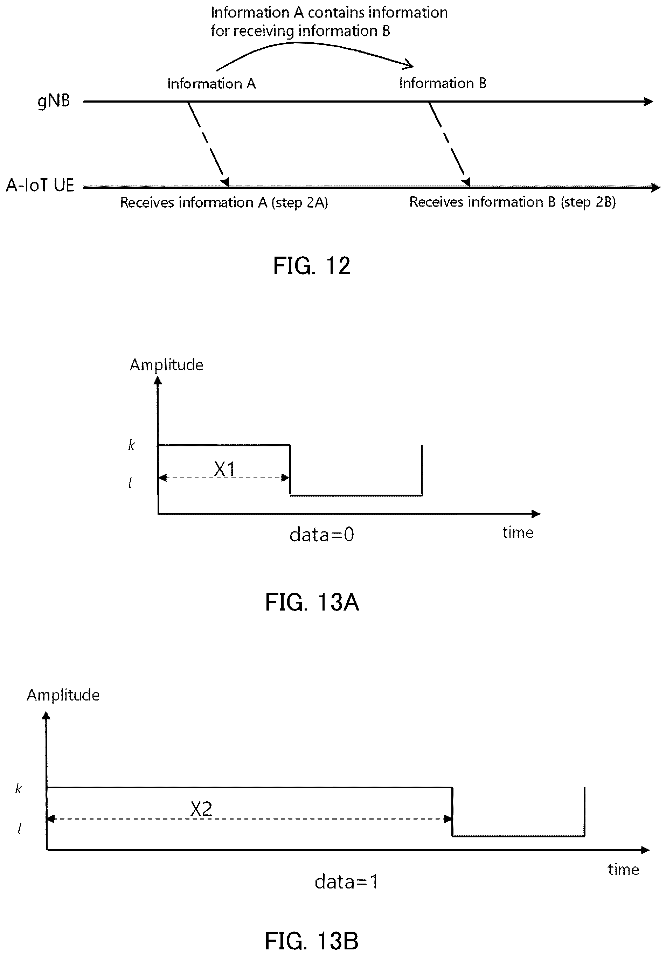

FIG. 12 is a diagram illustrating Proposal 1. FIG. 12 illustrates a signal flow between a base station (gNB) and the A-IoT UE (step 1 is not illustrated). Further, FIG. 12 illustrates a signal flow of DT in Topology 1.

step 2 of receiving information from the base station is divided into step 2A and step 2B as illustrated in FIG. 12. The A-IoT UE receives information A in step 2A and receives information B in step 2B.

Information A may include information for receiving information B. The A-IoT UE may receive information B based on the information included in information A. Information A may be referred to as control information, and information B may be referred to as data information.

Note that, in FIG. 12, an example in which step 2 of DT in Topology 1 is divided into two sub-steps (step 2A and step 2B) is illustrated, but also in DO-DTT in Topology 1, step 2 of receiving information from the base station is divided into two sub-steps. Further, in DT and DO-DTT in Topology 2, step 2 of receiving information from the int. UE is also divided into two sub-steps.

Information A includes, for example, one or a plurality of pieces of information from the following 1. to 7.

### 1. Time Domain Resource

Information A includes information on a time domain resource of information B. The time domain resource may be, for example, a starting time resource/the number of time resources of information B. The starting time resource may be indicated in a time unit, such as a slot or a symbol.

### 2. Frequency Domain Resource

Information A includes information on a frequency domain resource of information B. The frequency domain resource may be, for example, a starting frequency resource/the number of frequency resources of information B. The starting frequency resource may be indicated in a frequency unit such as a subcarrier or a resource block.

### 3. Code Domain Resource

Information A includes information on a code domain resource used (applied) for information B. The code domain resource may be, for example, a base sequence (reference sequence) length/base sequence (reference sequence) index/cyclic shift/orthogonal cover code index used for information B. The base sequence may be referred to as a root sequence.

### 4. Waveform/Modulation Scheme

Information A includes information on a waveform/modulation scheme used for information B. The waveform/modulation scheme may be, for example, any of ASK (OOK), FSK, PSK, and OFDM.

Note that ASK is an abbreviation for Amplitude Shift Keying. OOK is an abbreviation for On-Off-Keying. FSK is an abbreviation for Frequency Shift Keying. PSK is an abbreviation for Phase Shift Keying. OFDM is an abbreviation for Orthogonal Frequency-Division Multiplexing.

In a case where ASK (OOK) is used for the waveform/modulation scheme of information B, information indicating any of the following four candidates (schemes) may be included in information A. The following four schemes define how a state (or information) such as 1 or 0 is represented in ASK (OOK).

### - ASK/OOK-1

In ASK/OOK-1, a single bit is indicated in a time unit, such as one symbol or one slot. For example, 1 and 0 in OOK are indicated as follows.
OOK = 1: All subcarriers are modulated.
OOK = 0: The power of all subcarriers is set to 0.

### - ASK/OOK-2

In ASK/OOK-2, the states of 0 and 1 are indicated in parallel M-bit OOK in the frequency domain. For example, a frequency unit such as a subcarrier is divided into M segments, and 1 and 0 in OOK are indicated as follows.
OOK = 1: All subcarriers in the segment are modulated.
OOK = 0: The power of all subcarriers in the segment is set to 0.

### · ASK/OOK-3

In ASK/OOK-3, the states of 0 and 1 are indicated in multi-tone single-bit OOK. For example, a frequency unit such as a subcarrier is divided into L segments, and 1 and 0 in OOK are indicated as follows.
OOK = 1: One subcarrier of each segment is modulated, and the power of the remaining subcarriers is set to 0.
OOK = 0: The power of all subcarriers of all segments is set to 0.

### - ASK/OOK-4

In ASK/OOK-4, the states of 0 and 1 are indicated in transform M-bit OOK in the time domain. For example, OOK is generated by a transformation such as DFT/least squares. An OFDM based waveform is used to approximate an OOK signal in the time domain. A set of frequency domain signals is determined such that a time domain signal after OFDM modulation is close to the OOK signal.

In a case where FSK is used as the waveform/modulation scheme of information B, information indicating any of the following two candidates (schemes) may be included in information A. The following two schemes indicate how a state (or information) such as 1 or 0 is represented in FSK.

### - FSK-1

In FSK-1, a frequency unit such as a subcarrier is separated into M pairs of segments. In a pair of segments, one segment is modulated, and the power of the other segment is set to 0.

### - FSK-2

In FSK-2, a frequency unit such as a subcarrier is separated into 2^M segments. One segment of the 2^M segments is modulated, and the power of the remaining segments is set to 0.

### 5. Coding Scheme

Information A includes information on a coding scheme used for information B. The coding scheme may be, for example, the following coding schemes.

### - Pulse Interval Encoding (PIE)

In PIE, 0 or 1 is indicated based on the time when the inversion of the amplitude, power, frequency, or phase is detected.

FIGS. 13A and 13B are diagrams illustrating PIE. The vertical axis in FIGS. 13A and 13B is the amplitude. The horizontal axis is time. The vertical axis may be the power, the frequency, or the phase.

Data 0 and 1 are indicated based on the following, for example.
data = 0: The amplitude is maintained at k for time duration X1 and is inverted to l after time duration X1.
data = 1: The amplitude is maintained at k for time duration X2 (X2 > X1) and is inverted to l after time duration X2.

The definitions representing data = 0 and data = 1 may be interchanged. For example, data 0 and 1 may be indicated based on the following.
data = 0: The amplitude is maintained at k for time duration X2 and is inverted to l after time duration X2.
data = 1: The amplitude is maintained at k for time duration X1 and is inverted to l after time duration X1.

### - Frequency Modulation 0 (FM0)

In FM0, the amplitude, power, frequency, or phase is inverted at the boundary of a time unit, such as a symbol or a slot. In FM0, in a case where data is 0, for example, the amplitude, power, frequency, or phase is inverted at the center of the time unit. In FM0, in a case where data is 1, for example, the amplitude, power, frequency, or phase is not inverted at the center of the time unit.

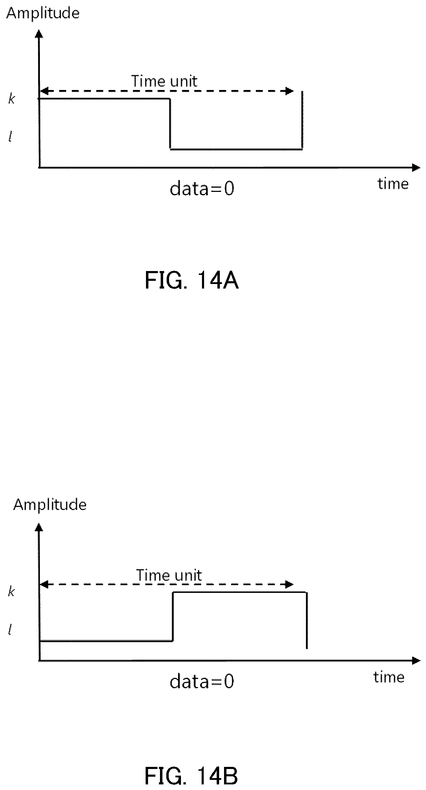

FIGS. 14A and 14B are diagrams illustrating data 0 of FM0. The vertical axis in FIGS. 14A and 14B is the amplitude. The horizontal axis is time. The vertical axis may be the power, the frequency, or the phase.

The data 0 is indicated, for example, based on the following.

data = 0: The amplitude is inverted at the boundary of a time unit, such as a symbol or a slot, and the amplitude is inverted at the center of the time unit.

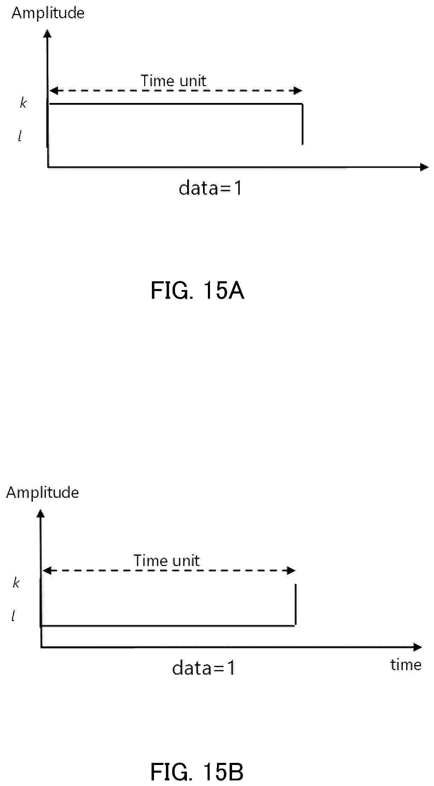

FIGS. 15A and 15B are diagrams illustrating data 1 of FM0. The vertical axis in FIGS. 15A and 15B is the amplitude. The horizontal axis is time. The vertical axis may be the power, the frequency, or the phase.

The data 1 is indicated, for example, based on the following.

data = 1: The amplitude is inverted at the boundary of a time unit, such as a symbol or a slot, and the amplitude is not inverted at the center of the time unit.

The definitions representing data = 0 and data = 1 may be interchanged. For example, data 0 and 1 may be indicated based on the following.
data = 0: The amplitude is inverted at the boundary of a time unit, such as a symbol or a slot, and the amplitude is not inverted at the center of the time unit.
data = 1: The amplitude is inverted at the boundary of a time unit, such as a symbol or a slot, and the amplitude is inverted at the center of the time unit.

### - Mirror Encoding

In the mirror encoding, in a case where data is 0, the amplitude, the power, the frequency, or the phase is not inverted at the center of a time unit, such as a symbol or a slot, and in a case where data is 1, the amplitude, the power, the frequency, or the phase is inverted at the center of a time unit. In addition, in the mirror encoding, the amplitude, the power, the frequency, or the phase is not inverted at the boundary of a time unit, such as a symbol or a slot.

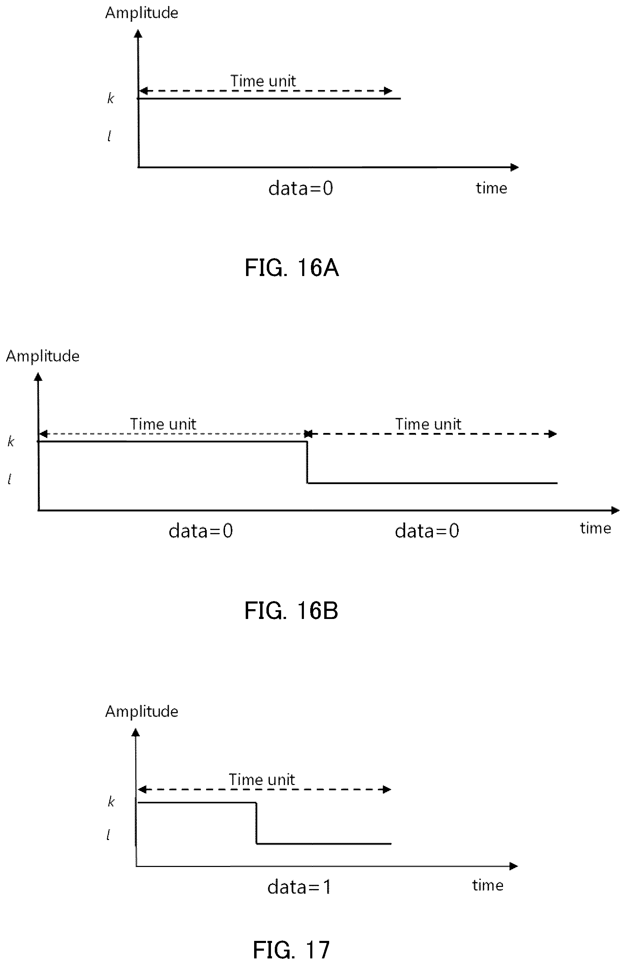

FIGS. 16A and 16B are diagrams illustrating data 0 of the mirror encoding. The vertical axis of FIGS. 16A and 16B is the amplitude. The horizontal axis is time. The vertical axis may be the power, the frequency, or the phase.

The data 0 is indicated, for example, based on the following.

data = 0: The amplitude is not inverted at the center of a time unit, such as a symbol or a slot, and in a case where 0 continues, the amplitude is inverted at the boundary of the time unit.

FIG. 17 is a diagram illustrating data 1 of the mirror encoding. The vertical axis of FIG. 17 is the amplitude. The horizontal axis is time. The vertical axis may be the power, the frequency, or the phase.

The data 1 is indicated, for example, based on the following.

data = 1: The amplitude is inverted at the center of a time unit, such as a symbol or a slot.

The definitions representing data = 0 and data = 1 may be interchanged. For example, data 0 and 1 may be indicated based on the following.
data = 0: The amplitude is inverted at the center of a time unit, such as a symbol or a slot.
data = 1: The amplitude is not inverted at the center of a time unit, such as a symbol or a slot, and in a case where 1 continues, the amplitude is inverted at the boundary of the time unit.

### - Manchester Coding

In Manchester coding, the amplitude, power, frequency, or phase is inverted at the center of a time unit, such as a symbol or a slot. In addition, in Manchester coding, the amplitude, power, frequency, or phase is inverted between two data 0, and the amplitude, power, frequency, or phase is inverted between two data 1.

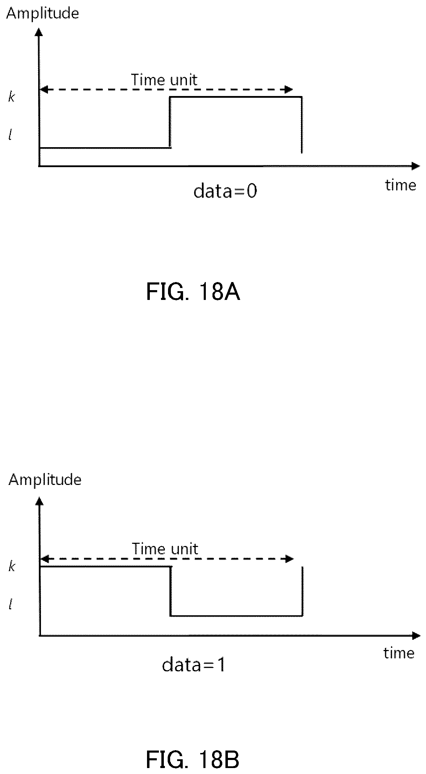

FIGS. 18A and 18B are diagrams illustrating Manchester coding. The vertical axis in FIGS. 18A and 18B is the amplitude. The horizontal axis is time. The vertical axis may be the power, the frequency, or the phase.

Data 0 and 1 are indicated based on the following, for example.
data = 0: The amplitude is inverted from l to k (k > l) at the center of a time unit, such as a symbol or a slot.
data = 1: The amplitude is inverted from k to l at the center of a time unit, such as a symbol or a slot.

The definitions representing data = 0 and data = 1 may be interchanged. For example, data 0 and 1 may be indicated based on the following.
data = 0: The amplitude is inverted from k to l at the center of a time unit, such as a symbol or a slot.
data = 1: The amplitude is inverted from l to k at the center of a time unit, such as a symbol or a slot.

### 6. Related Information of Target A-IoT UE

Information A includes information on the A-IoT UE (target A-IoT UE) that receives information A. The information may be regarded as destination information of information A. The network, such as a BS/int. UE, transmits (indicates) information A to all or some of the A-IoT UEs under the control of the network, for example, based on the destination information included in information A. The A-IoT UE receives information A based on the destination information of the A-IoT UE that receives information A, which is included in information A.

Information A includes information on the target A-IoT UE that receives information B. The information may be regarded as destination information of information B. The network, such as a BS/int. UE, transmits (indicates) information B to all or some of the A-IoT UEs under the control of the network, for example, based on the destination information included in information A. The A-IoT UE receives information B based on the destination information of the A-IoT UE that receives information B, which is included in information A.

The destination information may be, for example, an A-IoT UE-specific identifier (ID) or an ID indicated from the network.

The ID indicated from the network may be static or dynamic. The ID indicated from the network may be indicated in, for example, higher layer signaling such as RRC or may be indicated in initial access such as random access. The ID indicated from the network may be, for example, an ID identified in a group such as a cell unit, an ID identified in each individual A-IoT UE, or an ID identified in a UE group in which a plurality of A-IoT UEs are bundled. Information A may be scrambled with, for example, the destination information such as the ID.

### 7. Content/Format of Information B

Information A includes information which indicates what kind of content is transmitted in information B/information on the format of information B.

The format of information B is, for example, a time/frequency resource/coding method/waveform of information B. A plurality of formats (time/frequency resources/coding methods/waveforms, and the like) of information B are defined in advance in the specification and/or configured from a NW, and one format is designated in information A. The A-IoT UE receives information B using the format designated in information A.

### <Proposal 1: Variation 1>

The information for receiving information B (information described in 1. to 7. above) may be pre-defined in the specification or may be pre-configured in configuration information transmitted from the network such as the BS/int. UE. The configuration information is information different from information A and may be indicated in higher layer signaling such as RRC.

The information for receiving information B may be divided into information indicated in information A, information pre-defined in the specification, and information pre-configured in the configuration information. In other words, the information for receiving information B may be partially indicated in information A, partially pre-defined in the specification, and partially pre-configured in the configuration information.

### <Proposal 1: Variation 2>

The information for receiving information A may be pre-defined in the specification or may be pre-configured in the configuration information transmitted from the network such as the BS/int. UE. The information for receiving information A may be the information described in 1. to 7. above.

The information for receiving information A may be divided into information pre-defined in the specification and information pre-configured in the configuration information. In other words, the information for receiving information A may be partially pre-defined in the specification and partially pre-configured in the configuration information.

### <Proposal 1: Variation 3>

A plurality of candidates for the information for receiving information A/information B may be pre-defined in the specification or may be pre-configured in the configuration information transmitted from the network such as the BS/int. UE. The A-IoT UE may blind-decode the plurality of pre-defined/pre-configured candidates and receive information A/information B.

### <Proposal 1: Variation 4>

One piece of information A may be applied to only one piece of information B.

In a case where a plurality of pieces of information B follow one piece of information A, the one piece of information A may be applied to the subsequent plurality of pieces of information B. A part of the information included in information A may be applied to one piece of information B, and a part of the information included in information A may be applied to a plurality of pieces of information B.

### <Proposal 1: Variation 5>

The A-IoT UE may report supported information (information described in 1. to 7. above) as a capability to the network such as the BS/int. UE.

### <Proposal 1: Variation 6>

Information A and information B may be indicated to the A-IoT UE using the same physical layer channel or may be indicated to the A-IoT UE using different physical layer channels.

### <Proposal 1: Variation 7>

Step 2 may include only the reception of information B (data information). In other words, the reception of information A (control information) may be omitted. All or a part of the information for receiving information B (information described in 1. to 7. above) may be pre-defined in the specification or may be pre-configured in the configuration information.

### <Proposal 1: Variation 8>

Information A and information B may be transmitted in one time/frequency resource without being separated.

Resource information of information A and information B in one time/frequency resource may be pre-defined in the specification or may be pre-configured in the configuration information. For example, information on which part of one time/frequency resource is a resource of information A and which part is a resource of information B may be pre-defined or may be pre-configured.

The resource information of information A/information B in one time/frequency resource may be indicated by using, for example, the number of symbols or the number of slots from the start symbol or the start slot of the one time/frequency resource. For example, start symbol X to Y symbol of one time/frequency resource may be indicated as a resource of information A, and a resource of information B may be the remaining resources. The A-IoT UE may buffer the entire information (entire one time/frequency resource), decode information A based on the resource information of information A, and decode information B after decoding information A.

### <Proposal 1: Summary>

The A-IoT UE receives information B based on information A transmitted from the network such as the BS/int. UE. With this operation, the A-IoT UE can appropriately receive the information from the network such as the BS/int. UE.

### <Proposal 2>

In Proposal 2, a technology for the A-IoT UE to transmit an appropriate signal to the network such as the BS/int. UE is proposed. In Proposal 2, the following Options 1 and 2 are proposed.

### <Proposal 2: Option 1>

In Proposal 2: Option 1, information received by the A-IoT UE from the network such as the BS/int. UE includes information on a signal to be transmitted by the A-IoT UE to the network such as the BS/int. UE. The A-IoT UE transmits the signal to the network such as the BS/int. UE based on the information received from the network such as the BS/int. UE.

For example, as described in <Communication Flow> above, the A-IoT UE receives information in step 2 of the communication flow of DO-DTT in Topology 1 and transmits a signal to the base station in step 3. The A-IoT UE transmits (step 3) the signal to the base station based on the information received in step 2.

In addition, as described in <Communication Flow> above, the A-IoT UE receives information in step 2 of the communication flow of DO-DTT in Topology 2 and transmits a signal to the int. UE in step 3. The A-IoT UE transmits the signal to the int. UE based on the information received in step 2.

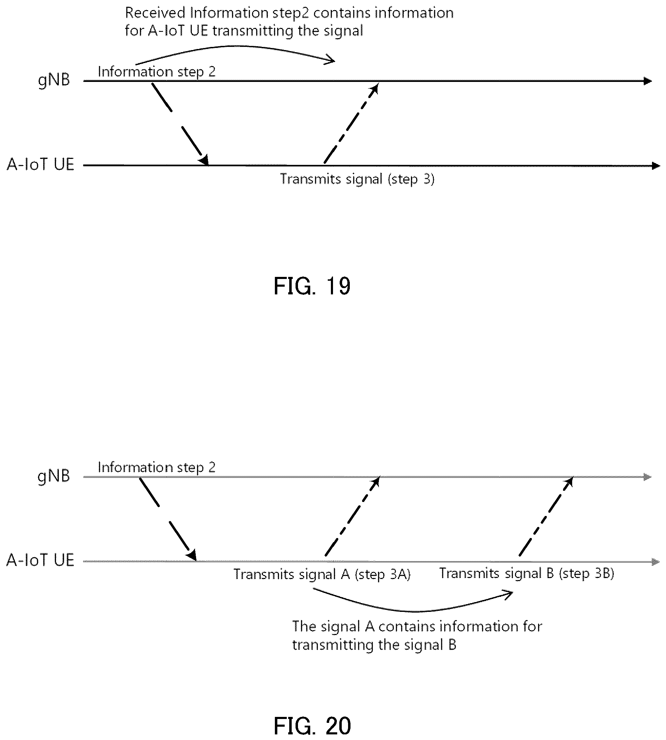

FIG. 19 is a diagram illustrating Proposal 2: Option 1. FIG. 19 illustrates a flow of signals between the base station (gNB) and the A-IoT UE (step 1 is not illustrated). In addition, FIG. 19 illustrates a flow of signals of the DO-DTT in Topology 1.

As illustrated in FIG. 19, in DO-DTT in Topology 1, the A-IoT UE receives information from the base station (step 2). The A-IoT UE transmits a signal to the base station based on the information received from the base station (step 3).

In FIG. 19, the signal transmission of DO-DTT in Topology 1 has been described, but also in DO-DTT in Topology 2, the A-IoT UE transmits (step 3) a signal to the int. UE based on the information received from the int. UE in step 2.

In addition, the A-IoT UE may transmit a signal to the network such as the BS/int. UE based on information A/information B described in Proposal 1.

The information received in step 2 includes one or a plurality of the following pieces of information 1. to 8.

### 1. Time Domain Resource

The information received in step 2 includes information on a frequency domain resource of the signal transmitted in step 3. The time domain resource may be, for example, a start time resource/the number of time resources of the signal transmitted in step 3. The start time resource/number of time resources may be indicated in a time unit, such as a slot or a symbol.

### 2. Frequency Domain Resource

The information received in step 2 includes information on a frequency domain resource of the signal transmitted in step 3. The frequency domain resource may be, for example, a start frequency resource/the number of frequency resources of the signal transmitted in step 3. The start frequency resource/number of frequency resources may be indicated in a frequency unit such as a subcarrier or a resource block.

### 3. Code domain Resource

The information received in step 2 includes information on a code domain resource used (applied) for the signal transmitted in step 3. The code domain resource may be, for example, a base sequence (reference sequence) length/base sequence (reference sequence) index/cyclic shift/orthogonal cover code index used for the signal transmitted in step 3.

### 4. Waveform/Modulation Scheme

The information received in step 2 includes information on a waveform/modulation scheme used for the signal transmitted in step 3. The waveform/modulation scheme may be, for example, any of ASK (OOK), FSK, PSK, or OFDM.

In a case where ASK (OOK) is used as the waveform/modulation scheme of the signal transmitted in step 3, information indicating any of the four candidates described in "4. Waveform/Modulation Scheme" of <Proposal 1> may be included in the information received in step 2.

### 5. Coding Scheme

The information received in step 2 includes information on a coding scheme used for the signal transmitted in step 3. The coding scheme may be the schemes described in "5. Coding Scheme" of <Proposal 1>.

### 6. Related Information of Target A-IoT UE

The information received in step 2 includes information on the A-IoT UE (target A-IoT UE) that receives the information in step 2. The information may be regarded as destination information of the information in step 2. The network such as the BS/int. UE transmits (indicates) the information in step 2 to all or some of the A-IoT UEs under the control of the network based on the destination information included in the information in step 2.

The destination information may be, for example, an A-IoT UE-specific ID or an ID indicated from the network.

The ID indicated from the network may be static or dynamic. The ID indicated from the network may be indicated in, for example, higher layer signaling such as RRC or may be indicated in initial access such as random access. The ID indicated from the network may be, for example, an ID identified in a group such as a cell unit, an ID identified in each individual A-IoT UE, or an ID identified in a UE group in which a plurality of A-IoT UEs are bundled. The information received in step 2 may be scrambled with, for example, the destination information such as an ID.

The information received in step 2 includes information on the target A-IoT UE that transmits a signal in step 3. For example, the information received in step 2 may include a specific ID of the A-IoT UE that transmits a signal in step 3 or an ID indicated to the A-IoT UE from the network.

### 7. Content/Format of Signal in step 3

The information received in step 2 includes information indicating what content is transmitted in a signal transmitted in step 3/information on the format of the signal in step 3.

The format of the signal in step 3 is, for example, a time/frequency resource/coding method/waveform of the signal in step 3. A plurality of formats (time/frequency resources/coding methods/waveforms, and the like) of the signal in step 3 are defined in advance in the specification and/or configured from the NW, and one format is designated in the information received in step 2. The A-IoT UE transmits the signal in step 3 using the format designated in the information received in step 2.

### 8. Transmit Power of Signal in Step 3

The information received in step 2 includes information on the transmit power of the signal transmitted in step 3. The A-IoT UE controls the transmit power of the signal transmitted in step 3 based on the information on the transmit power included in the information received in step 2.

### <Proposal 2: Option 2>

In Proposal 2: Option 2, step 3 in which the A-IoT UE transmits a signal to the network such as the BS/int. UE is divided into two sub-steps. For example, step 3 is divided into the following step 3A and step 3B.
- Step 3A: The A-IoT UE transmits, for example, signal A such as control information to the network such as the BS/int. UE.
- Step 3B: The A-IoT UE transmits, for example, signal B such as data information to the network such as the BS/int. UE.

FIG. 20 is a diagram illustrating Proposal 2: Option 2. FIG. 20 illustrates a flow of signals between the base station (gNB) and the A-IoT UE (step 1 is not illustrated). Further, FIG. 20 illustrates a flow of signals of DO-DTT in Topology 1.

As illustrated in FIG. 20, step 3 in which a signal is transmitted to the base station is divided into step 3A and step 3B. The A-IoT UE transmits signal A to the base station in step 3A and transmits signal B in step 3B.

Signal A may include information on signal B to be transmitted to the base station. The base station receives signal B based on the information included in signal A. Signal A may be referred to as control information, and signal B may be referred to as data information.

The information on signal B may be the information described in 1. to 8. of <Proposal 2: Option 1>. For example, the A-IoT UE may apply one or a plurality of pieces of information described in 1. to 8. of <Proposal 2: Option 1> to signal B to be transmitted to the base station, and may transmit the information applied to signal B to the base station via signal A as the information on signal B.

In FIG. 20, the signal transmission of DO-DTT in Topology 1 has been described, but also in DO-DTT in Topology 2, the A-IoT UE divides step 3 into two steps, step 3A and step 3B, and transmits signal A and signal B to the int. UE.

### <Proposal 2: Variation 1>

The information applied to signal B (for example, the information described in 1. to 8. of Proposal 2) may be indicated by the information in step 2/step 2A/step 2B, may be pre-defined in the specification, or may be pre-configured in the configuration information transmitted from the network such as the BS/the int. UE.

The information applied to signal B may be divided into the information indicated in step 2/step 2A/step 2B, the information pre-defined in the specification, and the information pre-configured in the configuration information. In other words, the information applied to signal B may be partially indicated in step 2/step 2A/step 2B, partially pre-defined in the specification, and partially pre-configured in the configuration information. Further, the information applied to signal B may be transmitted to the network via signal A.

### <Proposal 2: Variation 2>

The information applied to signal A (for example, the information described in 1. to 8. of Proposal 2) may be indicated by the information in step 2/step 2A/step 2B, may be pre-defined in the specification, or may be pre-configured in the configuration information transmitted from the network such as the BS/the int. UE.

The information applied to signal A may be divided into the information indicated in step 2/step 2A/step 2B, the information pre-defined in the specification, and the information pre-configured in the configuration information. In other words, the information applied to signal A may be partially indicated in step 2/step 2A/step 2B, partially pre-defined in the specification, and partially pre-configured in the configuration information.

### <Proposal 2: Variation 3>

A plurality of candidates for the information for transmitting signal A/signal B may be pre-defined in the specification or may be indicated from the network such as the BS/the int. UE. The A-IoT UE may select one of the plurality of candidates and transmit signal A/signal B. The network such as the BS/the int. UE may perform blind decoding on the plurality of candidates and receive signal A/signal B.

### <Proposal 2: Variation 4>

One piece of information in step 2 may be applied to one or a plurality of the plurality of signals in step 3. For example, one piece of information in step 2 may be applied to one or both of signal A and signal B in step 3. A part of one piece of information in step 2 may be applied to one of the plurality of signals in step 3, and a part of one piece of information in step 2 may be applied to a plurality of signals in step 3.

### <Proposal 2: Variation 5>

One signal A may be applied to only one signal B.

In a case where a plurality of signals B follow one signal A, one signal A may be applied to the plurality of subsequent signals B. A part of the information included in signal A may be applied to one signal B, and a part of the information included in signal A may be applied to a plurality of signals B.

### <Proposal 2: Variation 6>

The A-IoT UE may report supported information (information described in 1. to 8. of <Proposal 2: Option 1>) as a capability to the network such as the BS/int. UE.

### <Proposal 2: Variation 7>

Signal A and signal B may be transmitted to the network such as the BS/int. UE using the same physical layer channel, or may be transmitted to the network such as the BS/int. UE using different physical layer channels.

### <Proposal 2: Variation 8>

Signal A and signal B may be transmitted in one time/frequency resource without being separated.

Resource information of signal A and signal B in one time/frequency resource may be pre-defined in the specification or may be pre-configured in the configuration information. For example, information on which part of the one time/frequency resource is a resource of signal A and which part is a resource of signal B may be pre-defined or may be pre-configured.

The resource information of signal A/signal B in one time/frequency resource may be indicated by, for example, the number of symbols or the number of slots from the start symbol or the start slot of the one time/frequency resource. For example, start symbol X to Y symbol of one time/frequency resource may be indicated as a resource of signal A, and a resource of signal B may be the remaining resources. The network such as the BS/int. UE may buffer the entire signal (entire one time/frequency resource), decode signal A based on the resource information of signal A, and decode signal B after decoding signal A.

### <Proposal 2: Variation 9>

One or a plurality of pieces of information of 1. to 8. of Proposal 2 may be included in information A/information B received in step 2A/step 2B.

### <Proposal 2: Summary>

The A-IoT UE transmits a signal to the network such as the BS/int. UE based on information received from the network such as the BS/int. UE. With this operation, the A-IoT UE can transmit an appropriate signal to the network such as the BS/int. UE.

### <Proposal 3>

In Proposal 3, a technology for the A-IoT UE to appropriately determine the presence or absence of a signal transmission flow (step 3) is proposed.

The A-IoT UE determines the presence or absence of the transmission flow based on one or a plurality of the following 1. to 8. (determines whether to execute the communication flow of DT or the communication flow of DO-DTT).

### 1. Reception Information

The A-IoT UE determines the presence or absence of the transmission flow based on information received from the network such as the BS/int. UE. For example, the A-IoT UE determines the presence or absence of the transmission flow based on the following (a) or (b).

### (a) Information for DT

The A-IoT UE determines that there is no transmission flow when receiving information for DT (for example, information related to DT traffic) in step 2/step 2A/step 2B. Note that, when receiving the information for DT in step 2, the A-IoT UE may determine that there is no reception of subsequent information (for example, information B in step 2B).

### (b) Information for DO-DTT

The A-IoT UE determines that there is a transmission flow when receiving information for DO-DTT (for example, information related to DO-DTT traffic) in step 2/step 2A/step 2B.

### 2. Time Domain Resource

The A-IoT UE determines the presence or absence of the transmission flow based on a time domain resource of information received from the network such as the BS/int. UE. For example, the A-IoT UE determines the presence or absence of the transmission flow based on the size/position of the time domain resource of the information received in step 2/step 2A/step 2B.

### 3. Frequency Domain Resource

The A-IoT UE determines the presence or absence of the transmission flow based on a frequency domain resource of information received from the network such as the BS/int. UE. For example, the A-IoT UE determines the presence or absence of the transmission flow based on the size/position of the frequency domain resource of the information received in step 2/step 2A/step 2B.

### 4. Code domain Resource

The A-IoT UE determines the presence or absence of the transmission flow based on a code domain resource used for information received from the network such as the BS/int. UE. For example, the A-IoT UE determines the presence or absence of the transmission flow based on the code domain resource used for the information received in step 2/step 2A/step 2B.

### 5. Indication

The A-IoT UE determines the presence or absence of the transmission flow based on an indication included in information received from the network such as the BS/int. UE. For example, the A-IoT UE determines the presence or absence of the transmission flow based on the indication indicating whether there is a transmission flow, which is included in the information received in step 2/step 2A/step 2B.

### 6. Scrambling ID

The A-IoT UE determines the presence or absence of the transmission flow based on a scrambling ID used for information received from the network such as the BS/int. UE. For example, the A-IoT UE determines the presence or absence of the transmission flow based on the scrambling ID used for the information received in step 2/step 2A/step 2B. The scrambling ID may be an ID described in "Related Information of Target A-IoT UE" of <Proposal 1>.

### 7. Carrier in Step 1

The A-IoT UE determines the presence or absence of the transmission flow based on the carrier in step 1. For example, the A-IoT UE determines the presence or absence of the transmission flow based on the waveform/the time domain resource/the frequency domain resource/the code domain resource/the signal duration/the phase switch of the carrier in step 1.

### 8. Size of Reception Information

The A-IoT UE determines the presence or absence of the transmission flow based on the size of information received from the network such as the BS/int. UE. For example, the A-IoT UE determines the presence or absence of the transmission flow based on the total payload size of the information received in step 2/step 2A/step 2B.

### <Proposal 3: Variation>

The A-IoT UE may support only one of DT and DO-DTT. In a case where the A-IoT UE is woken up by a carrier waveform, the A-IoT UE executes an operation of supporting DT or DO-DTT.

### <Proposal 3: Summary>

The A-IoT UE determines the presence or absence of signal transmission to the network such as the BS/int. UE based on information transmitted from the network such as the BS/int. UE. With this operation, the A-IoT UE can appropriately determine the presence or absence of the signal transmission flow (step 3).

### <Proposal 4>

The A-IoT UE receives information in DT and DO-DTT (step 2/step 2A/step 2B). In Proposal 4, a technology for the A-IoT UE to execute an appropriate information reception operation is provided.

The size of information received by the A-IoT UE is determined by the following Options 1 to 5. The size of information received by the A-IoT UE is the size of information received in step 2/step 2A/step 2B, and is, for example, the size/payload length indicated by bits.

### <Proposal 4: Option 1>

The size of information received by the A-IoT UE is a fixed value and is defined in the specification. The maximum value/minimum value of the size of information received by the A-IoT UE may be defined in the specification.

### <Proposal 4: Option 2>

The size of information received by the A-IoT UE is indicated from the network such as the BS/int. UE.

For example, the size of information received by the A-IoT UE is indicated by information before the information in step 2/step 2A/step 2B is received. For example, the size of information received by the A-IoT UE is indicated by RRC/MAC CE/DCI.

### <Proposal 4: Option 3>

The size of information received by the A-IoT UE is limited to a plurality of candidates. For example, the size of information received by the A-IoT UE is limited to three candidates of X bits, Y bits, and Z bits. One of the plurality of candidates is indicated to the A-IoT UE from the network such as the BS/int. UE.

### <Proposal 4: Option 4>

The size of information received by the A-IoT UE is implicitly indicated from the network such as the BS/int. UE. For example, the size of information received by the A-IoT UE is associated with a parameter indicated from the network such as the BS/int. UE. The number of parameters with which the size of information is associated may be one or may be a plurality.

The parameter with which the size of the information is associated may include, for example, a time domain resource/frequency domain resource/waveform/modulation scheme/coding scheme. For example, the number of bits of information received by the A-IoT UE may be calculated based on the size of a time domain resource/frequency domain resource.

The parameter with which the size of the information is associated may include, for example, a type/format of the information. For example, each type/format may be associated with a fixed and different number of bits. The type/format may be indicated from the network such as the BS/int. UE. The type of the information may indicate whether the information is control information or data information.

### <Proposal 4: Option 5>

The size of information received by the A-IoT UE is limited to a plurality of candidates. For example, the size of information received by the A-IoT UE is limited to three candidates of X bits, Y bits, and Z bits. The A-IoT UE performs blind decoding on information to be received using the plurality of candidates. The plurality of candidates may be indicated from the network such as the BS/int. UE or may be defined in the specification.

### <Proposal 4: Variation 1>

The A-IoT UE may report the size/maximum value/minimum value of information that can be received as a capability to the network such as the BS/int. UE.

### <Proposal 4: Variation 2>

The A-IoT UE may support a plurality of options in <Proposal 4>. The A-IoT UE may change the option to be applied according to the type of information to be received.

For example, the size/maximum value/minimum value of information A received in step 2A may be fixed, variable, or quasi-static.

For example, the size/maximum value/minimum value of information B received in step 2B may be variable and dynamic.

For example, the size/maximum value/minimum value of information B received in step 2B may be variable and quasi-static in consideration of a use case such as a command. Note that, in A-IoT, it is assumed that the packet size from the network, such as the BS/int. UE, is fixed to a certain extent.

### <Proposal 4: Variation 3>

The size/maximum value/minimum value of information that can be received by the A-IoT UE may be different depending on whether the information to be received is information A or information B.

### <Proposal 4: Summary>

The size of information received by the A-IoT UE is pre-defined/indicated to the A-IoT UE from the network such as the BS/int. UE. With this configuration, the A-IoT UE can execute an appropriate information reception operation. For example, the A-IoT UE only needs to receive information of the pre-defined/indicated size and can execute an appropriate information reception operation.

### <Proposal 5>

The A-IoT UE transmits a signal in DO-DTT (step 3/step 3A/step 3B). In Proposal 5, a technology for the A-IoT UE to execute an appropriate signal transmission operation is provided.

The size of a signal transmitted by the A-IoT UE is determined by the following Options 1 to 5. The size of a signal transmitted by the A-IoT UE is the size of a signal transmitted in step 3/step 3A/step 3B, and is indicated by, for example, bits.

### <Proposal 5: Option 1>

The size of a signal transmitted by the A-IoT UE is a fixed value and is defined in the specification. The maximum value/minimum value of the size of a signal transmitted by the A-IoT UE may be defined in the specification.

### <Proposal 5: Option 2>

The size of a signal transmitted by the A-IoT UE is indicated from the network such as the BS/int. UE and reported to the network such as the BS/int. UE by the A-IoT UE.

For example, the size of a signal transmitted by the A-IoT UE is indicated by information received by the A-IoT UE before the signal in step 3/step 3A/step 3B is transmitted. For example, the size of the signal transmitted by the A-IoT UE is indicated by RRC/MAC CE/DCI.

For example, the size of signal B transmitted by the A-IoT UE is indicated by information transmitted by the A-IoT UE before the signal in step 3/step 3A/step 3B is transmitted. For example, the size of the signal transmitted by the A-IoT UE is reported by RRC/MAC CE/DCI.

### <Proposal 5: Option 3>

The size of a signal transmitted by the A-IoT UE is limited to a plurality of candidates. For example, the size of a signal transmitted by the A-IoT UE is limited to three candidates of X bits, Y bits, and Z bits. One of the plurality of candidates is indicated to the A-IoT UE from the network such as the BS/int. UE. Alternatively, one of the plurality of candidates is reported to the network such as the BS/int. UE from the A-IoT UE.

### <Proposal 5: Option 4>

The size of a signal transmitted by the A-IoT UE is implicitly indicated from the network such as the BS/int. UE or is implicitly reported to the network such as the BS/int. UE by the A-IoT UE.

For example, the size of a signal transmitted by the A-IoT UE is associated with a parameter indicated from the network such as the BS/int. UE. For example, the size of a signal transmitted by the A-IoT UE is associated with a parameter reported to the network such as the BS/int. UE by the A-IoT UE. The number of parameters with which the size of a signal is associated may be one or may be a plurality.

The parameter with which the size of the signal is associated may include, for example, a time domain resource/frequency domain resource/waveform/modulation scheme/coding scheme. For example, the number of bits of a signal transmitted by the A-IoT UE may be calculated based on the size of the time domain resource/frequency domain resource.

The parameter with which the size of the signal is associated may include, for example, a type/format of the signal. For example, each type/format may be associated with a fixed and different number of bits. The type/format may be indicated from the network such as the BS/int. UE or may be reported to the network such as the BS/int. UE by the A-IoT UE.

### <Proposal 5: Option 5>

The size of a signal transmitted by the A-IoT UE is limited to a plurality of candidates. For example, the size of a signal transmitted by the A-IoT UE is limited to three candidates of X bits, Y bits, and Z bits.

The A-IoT UE determines one candidate among the plurality of candidates. The network such as the BS/int. UE performs blind decoding on a signal to be received using the plurality of candidates. The plurality of candidates are indicated from the network such as the BS/int. UE or are reported to the network such as the BS/int. UE by the A-IoT UE. The plurality of candidates may be defined in the specification.

### <Proposal 5: Variation 1>

The A-IoT UE may report the size/maximum value/minimum value of a signal that can be transmitted as a capability to the network such as the BS/int. UE.

### <Proposal 5: Variation 2>

The A-IoT UE may support a plurality of options in <Proposal 5>. The A-IoT UE may change the option to be applied according to the type of the signal to be transmitted.

For example, the size/maximum value/minimum value of signal A transmitted in step 3A may be fixed, variable, or quasi-static.

For example, the size/maximum value/minimum value of signal B transmitted in step 3B may be variable and dynamic.

For example, the size/maximum value/minimum value of signal B transmitted in step 3B may be variable and quasi-static in consideration of a use case such as an inventory. Note that, in A-IoT, it is assumed that the packet size to the network, such as the BS/int. UE, is fixed to a certain extent.

### <Proposal 5: Variation 3>

The size/maximum value/minimum value of a signal that can be transmitted by the A-IoT UE may be different depending on whether the signal to be transmitted is signal A or signal B.

### <Proposal 5: Summary>

The size of information transmitted by the A-IoT UE is pre-defined/indicated from the network, such as the BS/int. UE, to the A-IoT UE/reported to the network, such as the BS/int. UE, from the A-IoT UE. With this configuration, the A-IoT UE can execute an appropriate signal transmission operation. For example, the A-IoT UE only needs to transmit a signal of the pre-defined/indicated size and can execute an appropriate signal transmission operation.

### <Configuration of Base Station>

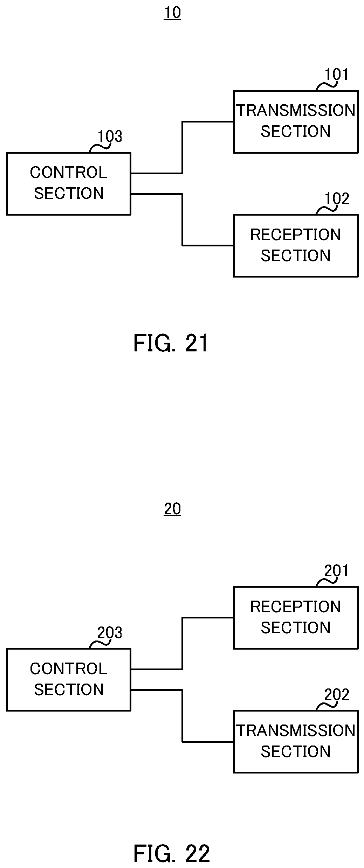

FIG. 21 is a block diagram illustrating one example of a configuration of base station 10 according to the embodiment. Base station 10 includes, for example, transmission section 101, reception section 102, and control section 103. Base station 10 communicates with device 20 (see FIG. 22) via radio. Base station 10 may be an intermediate node, an assisting node, or a terminal (a terminal of SL that communicates with device 20).

Transmission section 101 transmits a downlink (DL) signal to device 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of device 20. Moreover, the DL signal may include higher layer control information (e.g., Radio Resource Control (RRC) control information). Furthermore, the DL signal may include a reference signal.

Channels used for DL signal transmission include, for example, data channels and control channels. For example, the data channels may include a Physical Downlink Shared Channel (PDSCH), and the control channels may include a Physical Downlink Control Channel (PDCCH). Base station 10 transmits, to device 20, the control information using PDCCH, and the downlink data signal using PDSCH, for example.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as DMRS and PTRS is used for demodulation of a downlink data signal and is transmitted by using PDSCH.

Reception section 102 receives an uplink (UL) signal transmitted from device 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from device 20 and/or the data, control information, and/or the like acquired from the higher layer. Information on the allocated resource(s) may be included in control information to be transmitted to device 20.

Control section 103 configures a PUCCH resource, as an example of the resource to be used for transmitting and receiving a UL signal. Information on the PUCCH configuration such as a PUCCH cell timing pattern (PUCCH configuration information) may be indicated to device 20 by RRC.

Here, transmission section 101 transmits radio power for waking up device 20. The radio power may be a signal such as a carrier waveform.

Transmission section 101 transmits information. The information may be information A/information B. Control section 103 may include information for device 20 to receive information B in information A. Control section 103 may include information for device 20 to transmit a signal/signal A/signal B in the information/information A.

Reception section 202 receives a signal from device 20. The signal may be signal A/signal B. Control section 103 may receive a signal from device 20 based on the information transmitted to device 20 for device 20 to transmit the signal/signal A/signal B. Control section 103 may receive signal B based on the information on signal B included in signal A.

Transmission section 101 transmits information for device 20 to determine whether to transmit a signal/signal A/signal B to device 20.

### <Configuration of Device>

FIG. 22 is a block diagram illustrating an example of a configuration of device 20 according to the embodiment. Device 20 is a device having a lower complexity than a narrow band-internet of things (NB-IoT) device, and is, for example, A-IoT UE.

Device 20 includes, for example, reception section 201, transmission section 202, and control section 203. Device 20 communicates with, for example, base station 10 by radio. Device 20 may be, for example, an A-IoT device.

Reception section 201 receives a DL signal transmitted from base station 10. For example, reception section 201 receives the DL signal under the control of control section 203.

Transmission section 202 transmits a UL signal to base station 10. For example, transmission section 202 transmits the UL signal under the control of control section 203.

The UL signal may include, for example, an uplink data signal and control information (e.g., UCI). For example, information on processing capability of device 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, device 20 receives control information from base station 10 using PUCCH and transmits an uplink data signal using PUSCH.

The reference signal included in the UL signal may include, for example, at least one of a DMRS, PTRS, CSI-RS, SRS, and PRS. For example, the reference signals such as DMRS and PTRS are used for demodulation of an uplink data signal and are transmitted using an uplink channel (e.g., PUSCH).

Control section 203 controls communication operations of device 20 including reception processing in reception section 201 and transmission processing in transmission section 202.

By way of example, control section 203 acquires information such as data and control information from a higher layer and outputs the information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel State Information (CSI), or Scheduling Request (SR). The information to be fed back to base station 10 may be included in UCI. The UCI is transmitted in a PUCCH resource.

Control section 203 configures a PUCCH resource based on the configuration information (e.g., configuration information such as a PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Here, control section 203 wakes up device 20 based on the radio power from base station 10. After device 20 is woken up, reception section 201 receives, based on the first information transmitted from base station 10, the second information transmitted from base station 10. The first information may be information A. The second information may be information B. The first information may include the information described in 1. to 7. of Proposal 1.

Reception section 201 may receive the second information based on resource information of the second information included in the first information. The resource information may be a time domain resource/frequency domain resource.

The first information may include destination information related to a device that receives the first information. Reception section 201 may receive the first information based on the destination information.

Reception section 201 may receive the first information and/or the second information based on information on the predetermined size of the first information and/or the second information. The information on the size of the first information and/or the second information may be predetermined (pre-configured) by, for example, the specification/configuration information.

Reception section 201 may receive the information on the size of the first information and/or the second information from base station 10 and may receive the first information and/or the second information based on the received information.

In addition, transmission section 202 transmits a signal to base station 10 based on information transmitted from base station 10. The information transmitted from base station 10 may be information A. The information transmitted from base station 10 may include the information described in 1. to 8. of Proposal 2.

Transmission section 202 may transmit a signal based on the resource information of the signal included in the information transmitted from base station 10. Transmission section 202 may transmit the signal based on information on the predetermined size of the signal or information on the size of the signal indicated from base station 10.

Transmission section 202 may transmit the first signal to base station 10 and may transmit the second signal based on the information transmitted from base station 10. Transmission section 202 may include information on the second signal in the first signal. The first signal may be signal A. The second signal may be signal B.

Transmission section 202 may include information on the resource of the second signal in the first signal. The resource information may be a time domain resource/frequency domain resource.

Transmission section 202 may report to base station 10 information on the size of the signal to be transmitted to base station 10.

Further, control section 203 determines whether to transmit a signal to base station 10 based on the information transmitted from base station 10. The information transmitted from base station 10 may be the information described in 1. to 8. of Proposal 3.

The information transmitted from base station 10 may be, for example, information for DT terminated at device 20. The information transmitted from base station 10 may be, for example, information for DO-DTT that triggers signal transmission from the device.

Control section 203 may determine whether to transmit a signal based on a resource of the information transmitted from base station 10. The resource may be a time domain resource/frequency domain resource.

Control section 203 may determine whether to transmit a signal based on a code resource of the information transmitted from base station 10. The code resource may be a base sequence index/cyclic shift/orthogonal cover code index used for the information transmitted from base station 10.

Control section 203 may determine whether to transmit a signal based on an indication included in the information transmitted from base station 10.

The present disclosure has been described, thus far. Note that the classification of items in the above description is not essential to the present disclosure, and matters described in two or more items may be used in combination as necessary, and a matter described in an item may be applied to a matter described in another item (unless inconsistent).

### <Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

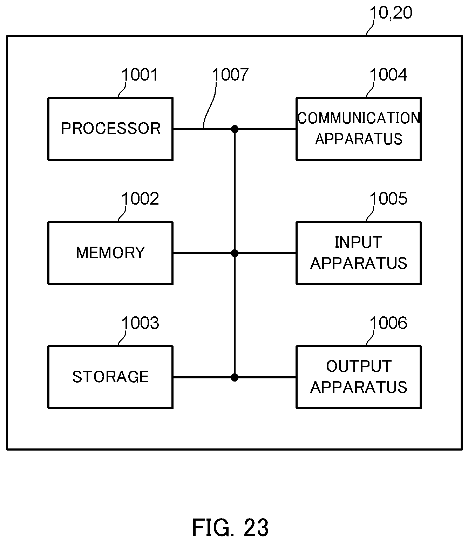

For example, a base station, a device, and so on according to one embodiment of the present disclosure may function as a computer that performs the processes of the radio communication method of the present disclosure. FIG. 23 is a diagram to show an example of a hardware structure of a base station and a device according to the present embodiment. Physically, the above-described base station 10 and device 20 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10 and device 20 may be configured to include one or more of apparatuses illustrated in the drawings, or may be configured not to include part of apparatuses.

Each function of base station 10 and devices 20 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and performs various processes according to these. As for the programs, programs to allow computers to perform at least part of the operations of the above-described embodiments are used. For example, control section 203 of device 20 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the radio communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch screen).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10 and devices 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### <Notification and Signaling of Information>

Notification of information is by no means limited to the embodiments described in the present disclosure, and other methods may be used as well. For example, indication of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

### <Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

### <Processing Procedure and the like>

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

### <Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

### <Direction of Input and Output>

The information or signals described in this disclosure may be output from a higher layer (or lower layer) to a lower layer (or higher layer). The information or signals may be input or output through multiple network nodes.

### <Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

### <Determination Method>

A decision or a determination may be realized by a value (0 or 1) represented by one bit, by a boolean value (true or false), or by comparison of numerical values (e.g., comparison with a predetermined values).

### <Variations and the like of Aspects>

Each aspect/embodiment described in the present disclosure may be used independently, may be used in combination, or may be used by switching according to operations. Further, indication (transmission/reporting) of predetermined information (e.g., indication (transmission/reporting) of "X") is not limited to an explicit indication (transmission/reporting), and may be performed by an implicit indication (transmission/reporting) (e.g., by not performing indication (transmission/reporting) of the predetermined information).

As described above, the present invention has been described in detail. It is apparent to a person skilled in the art that the present disclosure is not limited to one or more embodiments of the present disclosure described in the present specification. Modifications, alternatives, replacements, etc., of the present disclosure may be possible without departing from the subject matter and the scope of the present disclosure defined by the descriptions of claims. Therefore, the descriptions of the present specification are for illustrative purposes only, and are not intended to be limitations to the present disclosure.

### <Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

### <Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

### <System and Network>

As used in the present disclosure, the terms "system" and "network" are used interchangeably.

### <Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

### <Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

### <Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

### <Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, device 20 may have the functions of base station 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, base station 10 may have the functions of device 20 described above.

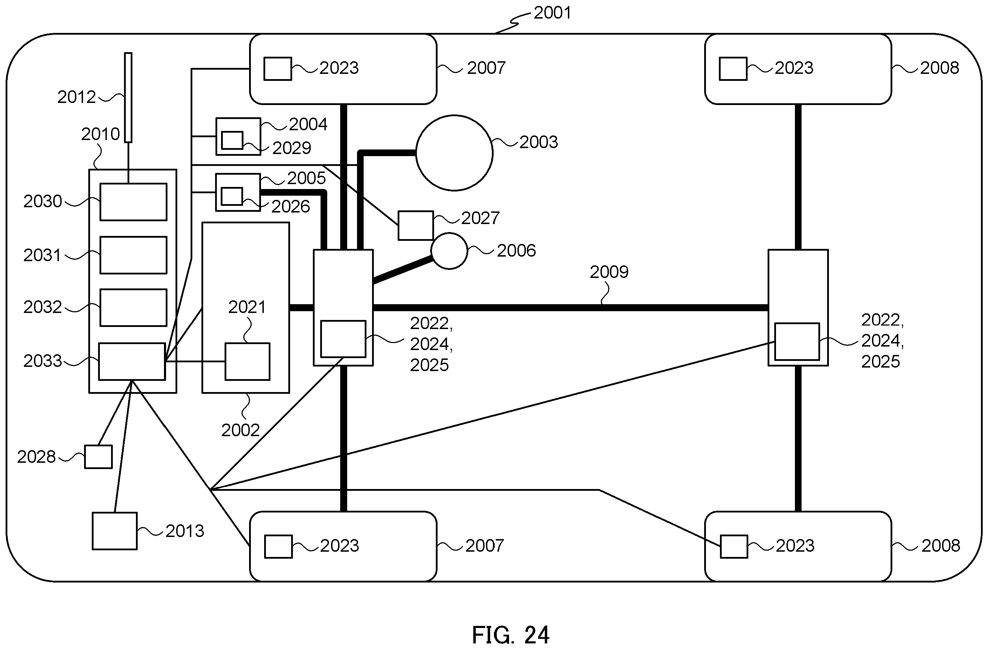

FIG. 24 illustrates an example of a configuration of vehicle 2001. As illustrated in FIG. 24, vehicle 2001 includes drive section 2002, steering section 2003, accelerator pedal 2004, brake pedal 2005, shift lever 2006, front wheel 2007, rear wheel 2008, axle 2009, electronic control section 2010, various sensors 2021 to 2029, information service section 2012, and communication module 2013. The aspects/embodiments described in the present disclosure may be applied to a communication device mounted in vehicle 2001, and may be applied to, for example, communication module 2013.

Drive section 2002 may include, for example, an engine, a motor, and a hybrid of an engine and a motor. Steering section 2003 includes at least a steering wheel and is configured to steer at least one of the front wheel or the rear wheel, based on the operation of the steering wheel operated by the user.

Electronic control section 2010 includes microprocessor 2031, memory (ROM, RAM) 2032, and communication port (IO port) 2033. Electronic control section 2010 receives signals from the various sensors 2021 to 2029 provided in vehicle 2001. Electronic control section 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service section 2012 includes various devices for providing (outputting) various kinds of information such as driving information, traffic information, and entertainment information, including a car navigation system, an audio system, a speaker, a television, and a radio, and one or more ECUs controlling these devices. The information service section 2012 provides various types of multimedia information and multimedia services to the occupants of the vehicle 2001 by using information obtained from the external device through the communication module 2013 or the like.

Information service section 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system section 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system section 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive section 2002, steering section 2003, accelerator pedal 2004, brake pedal 2005, shift lever 2006, front wheel 2007, rear wheel 2008, axle 2009, microprocessor 2031 and memory (ROM, RAM) 2032 in electronic control section 2010, and sensors 2021 to 29 provided in vehicle 2001.

Communication module 2013 is a communication device that can be controlled by microprocessor 2031 of electronic control section 2010 and that is capable of communicating with external devices. For example, various kinds of information are transmitted to and received from external devices through radio communication. Communication module 2013 may be internal to or external to electronic control section 2010. The external devices may include, for example, a base station, a mobile station, or the like.

Communication module 2013 may transmit at least one of signals from various sensors 2021 to 2029 described above input to electronic control section 2010, information obtained based on the signals, and information based on an input from the outside (a user) obtained via information service section 2012, to the external apparatus via radio communication. Electronic control section 2010, various sensors 2021 to 2029, information service section 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service section 2012 provided in vehicle 2001. Information service section 2012 may be referred to as an output unit that outputs information (for example, outputs information to devices, such as a display and a speaker, based on the PDSCH received by communication module 2013 (or data/information decoded from the PDSCH)).

In addition, communication module 2013 stores the various types of information received from the external devices in memory 2032 available to microprocessor 2031. Based on the information stored in memory 2032, microprocessor 2031 may control drive section 2002, steering section 2003, accelerator pedal 2004, brake pedal 2005, shift lever 2006, front wheel 2007, rear wheel 2008, axle 2009, and sensors 2021 to 2029 mounted in vehicle 2001.

### <Meaning and Interpretation of Terms>

As used herein, the term "determining" may encompass a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

### <Reference Signal>

A reference signal may be abbreviated as an "RS," and may be referred to as a "pilot" and so on, depending on which standard applies.

### <Meaning of "Based On">

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

### <"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

### <Means>

"Means" included in the configuration of each of the above apparatuses may be replaced by "parts," "circuits," "devices," etc.

### <Open Form>

In the case where the terms "include," "including" and variations thereof are used in the present disclosure, these terms are intended to be comprehensive in the same way as the term "comprising." Further, the term "or" used in the present specification is not intended to be an "exclusive or."

### <Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

The above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

### <Maximum Transmit Power>

The "maximum transmit power" described in the present disclosure may mean a maximum value of the transmit power, the nominal UE maximum transmit power, or the rated UE maximum transmit power.

### <Article>

In the present disclosure, where an article is added by translation, for example "a," "an," and "the," the disclosure may include that the noun following these articles is plural.

### <"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

### Industrial Applicability

An aspect of the present disclosure is useful for radio communication systems.

### Reference Signs List

10 Base station
20 Device
101, 202 Transmission section
102, 201 Reception section
103, 203 Control section

## Claims

1. A device having a lower complexity than a narrow band-internet of things (NB-IoT) device, the device comprising:
a control section that wakes up the device based on radio power from a network;
a reception section that receives information from the network after the device is woken up; and
a transmission section that transmits a signal to the network based on the information.

2. The device according to claim 1, wherein,
the transmission section transmits the signal based on resource information of the signal included in the information.

3. The device according to claim 1, wherein,
the transmission section transmits the signal based on information on a predetermined size of the signal or information on a size of the signal indicated from the network.

4. The device according to claim 1, wherein,
the transmission section transmits a first signal to the network and transmits a second signal based on the information.

5. The device according to claim 4, wherein,
the transmission section includes information on a resource of the second signal in the first signal.

6. A communication method, comprising:
waking up, by a device having a lower complexity than a narrow band-internet of things (NB-IoT) device, the device based on radio power from a network;
receiving, by the device, information from the network after the device is woken up; and
transmitting, by the device, a signal to the network based on the information.
